# EUROPÄISCHE PATENTSCHRIFT

(11) **EP 1 632 707 B1**
(45) Veröffentlichungstag und Bekanntmachung des Hinweises auf die Patenterteilung: **09.05.2007**
(21) Anmeldenummer: 04020822.5
(22) Anmeldetag: 02.09.2004
(51) Int. Cl.: F16P 3/14, F16M 11/24, F16B 7/18

(54) **Mit einer Lichtschranken-Schutzeinrichtug versehene Halterung an einer Maschine**
Support element provided with a photoelectric barrier
Elément de support équipé d'une barrière lumineuse

(43) Veröffentlichungstag der Anmeldung: 08.03.2006
(73) Patentinhaber: Fiessler Elektronik GmbH & Co. KG, 73734 Esslingen (DE)
(72) Erfinder: Fiessler, Götz, 73730 Esslingen (DE); Fiessler, Lutz, Dr., 73773 Aichwald (DE); Sommer, Stefan, 73249 Wernau (DE)
(74) Vertreter: Vetter, Hans

(56) Entgegenhaltungen:
- EP-A- 1 319 886
- EP-A- 1 344 973
- US-A1- 2002 037 195

## Beschreibung

Die Erfindung betrifft eine mit einer Lichtschranken-Schutzeinrichtung versehene, an einem linear in eine Arbeitsrichtung und zurück bewegbaren Werkzeug oder dessen Werkzeugträger einer Maschine befestigbare Halterung, die eine am Werkzeug oder Werkzeugträger fixierbare Führungseinrichtung und ein in der Arbeitsrichtung des Werkzeugs verschiebbar in oder an dieser geführtes und die Lichtschranken-Schutzeinrichtung tragendes Führungselement besitzt.

Derartige Schutzeinrichtungen sind in Verbindung mit Abkantpressen beispielsweise aus der EP-A2-1319886, der DE-PS 2750234, der EP-B-0264347, der EP-A-0146460, der DE 19717299 A oder der DE 10027156 A bekannt, wobei auch eine Anwendung für ähnliche Maschinen, wie Schneidemaschinen oder Stanzmaschinen, möglich ist. Die Lichtschranken-Schutzeinrichtung wird mit dem bewegbaren Werkzeug mitgeführt und besitzt einen Abstand zu diesem in der Bewegungsrichtung, wobei eine Unterbrechung eines oder mehrerer Lichtstrahlen oder eines Lichtvorhangs zu einem abrupten Abbremsen des Werkzeugs führt, um eine Verletzung eines möglicherweise die Lichtunterbrechung verursachenden menschlichen Körperteils zu verhindern. Die Lichtschranken-Schutzeinrichtung ist dabei mittels verstellbarer Halterungen am bewegbaren Werkzeug oder dessen Werkzeugträger befestigt, wobei der Abstand eingestellt werden kann.

Aus der AT 408026 B und der US 2004/0020255 A1 sind Halterungen für Lichtschranken-Schutzeinrichtungen der eingangs genannten Gattung bekannt, die beim Auffahren der Lichtschranken-Schutzeinrichtung auf ein Hindernis eine Verschiebung in der Halterung ermöglichen, die eine Beschädigung der Lichtschranken-Schutzeinrichtung verhindert. Bei einer der bekannten Anordnungen ist die Lichtschranken-Schutzeinrichtung nur über ein Raster einstellbar und kann somit nicht exakt genug an unterschiedliche Werkzeuge angepasst werden. Andererseits sind stufenlos einstellbare Halterungen bekannt, die nur durch Klemmung arretierbar sind. Die Klemmung muss dabei so stark ausgebildet sein, dass auch bei Arbeitsvibrationen und Arbeitsbewegungen der Maschine ein Abrutschen der Lichtschranken-Schutzeinrichtung nach unten verhindert wird. Diese starke Klemmung führt andererseits wieder dazu, dass beispielsweise eine Hand bei der Arbeitsbewegung nach unten eingeklemmt werden kann.

Eine Aufgabe der vorliegenden Erfindung besteht somit darin, eine mit einer Lichtschranken-Schutzeinrichtung verbundene Halterung zu schaffen, die eine stufenlose Justierung ermöglicht und andererseits beim Auftreffen der Lichtschranken-Schutzeinrichtung auf ein Hindernis eine Verschiebung derselben mit geringer Kraft zulässt.

Diese Aufgabe wird erfindungsgemäß durch eine Halterung mit den Merkmalen des Anspruchs 1 gelöst.

Die Vorteile der erfindungsgemäßen Halterung bestehen insbesondere darin, dass zum einen eine stufenlose Justierung der Lichtschranken-Schutzeinrichtung möglich ist und gleichzeitig eine Verschiebung der Lichtschranken-Schutzeinrichtung gegen die Bewegungsrichtung des Werkzeugs beim Auftreffen auf ein Hindernis äußerst leichtgängig mit geringem Kraftaufwand erfolgen kann, sodass beispielsweise ein dazwischen liegendes menschliches Körperteil nicht verletzt wird. Die Konstruktion kann sehr einfach und kostengünstig ausgeführt werden, und die Justierung kann schnell, einfach und präzise erfolgen.

Durch die in den Unteransprüchen aufgeführten Maßnahmen sind vorteilhafte Weiterbildungen und Verbesserungen der im Anspruch 1 angegebenen Halterung mit Lichtschranken-Schutzeinrichtung möglich.

In einer vorteilhaften konstruktiven Ausgestaltung ist das Führungselement als Profilstange ausgebildet, und die Führungseinrichtung besitzt eine mit einem freien Endbereich senkrecht am Führungselement mündende und am Werkzeug oder dessen Werkzeugträger fixierbare Profilstange, die im Wesentlichen der des Führungselements entspricht, wobei an zwei entgegengesetzten Seiten der Profilstange der Führungseinrichtung Führungswandungen fixiert sind, zwischen denen das Führungselement geführt ist. Die Halterung lässt sich dadurch in einfacher Weise aus handelsüblichen Grundelementen zusammensetzen, wobei durch entsprechende Ablängung der Profilstangen beliebige Dimensionierungen erreichbar sind.

In vorteilhafter Weise weist die Führungseinrichtung in Längsnuten des langgestreckten Führungselements Nutensteine auf, deren Reibungskraft einstellbar ist. Da ein Anschlagelement die Bewegung in Schwerkraftrichtung verhindert, braucht die Reibungskraft lediglich so gering eingestellt werden, dass eventuelle, durch Erschütterungen bedingte Bewegungen gegen die Schwerkraftrichtung verhindert werden.

Zur einfachen Verstellung und Fixierung des Anschlagelements weist dieses ebenfalls einen in einer dieser Längsnuten des Führungselements geführten und fixierbaren Nutenstein auf.

Jeder zur Einstellung der Reibungskraft dienende Nutenstein ist in einer vorteilhaften konstruktiven Ausgestaltung mit einer Einstellschraube versehen, die vorzugsweise jeweils am freien Endbereich einer Federzunge der Führungseinrichtung angeordnet ist, oder er ist über ein Abstandselement am freien Endbereich der Federzunge angeordnet. Diese Federzungen erstrecken sich zweckmäßigerweise in der Verschieberichtung des Führungselements und sind als Wandbereiche der beiden Führungswandungen der Führungseinrichtung ausgebildet, zwischen denen das Führungselement verschiebbar ist. Die Federzungen können in einfacher Weise durch entsprechende Schlitze in den Führungswandungen gebildet werden.

Um gute und symmetrische Führungseigenschaften zu erreichen, besitzt das Führungselement an gegenüberliegenden Seiten Längsnuten, wobei wenigstens je ein Nutenstein, vorzugsweise je zwei Nutensteine, an diesen beiden Seiten in den Längsnuten geführt sind.

Um eine schnelle und einfache Positionierung des Anschlagelements insbesondere bei verschiedenen auswechselbaren Werkzeugen zu ermöglichen, ist wenigstens eine Positionsmarkierung in der Längsrichtung verstellbar und fixierbar am Führungselement angeordnet, die vorzugsweise an einer an der das Anschlagelement tragenden Seitenwandung anschließenden Seitenwandung des Führungselements angeordnet ist. Die wenigstens eine Positionsmarkierung ist dabei vorzugsweise mittels eines Nutensteins in einer Längsnut des Führungselements verschiebbar und fixierbar.

Eine besonders exakte Positionierung erreicht man dadurch, dass die wenigstens eine Positionsmarkierung einerseits und das Anschlagelement andererseits als gegeneinander gerichtete Zeiger ausgebildet sind.

Zur Feinjustierung der Lichtschranken-Schutzeinrichtung ist in vorteilhafter Weise zwischen dem Führungselement und dieser Lichtschranken-Schutzeinrichtung eine diese in ihrer Position justierende Justiereinrichtung angeordnet, die vorzugsweise Mittel zum horizontalen und vertikalen Schwenken besitzt, insbesondere mittels Justierschrauben.

Ein Ausführungsbeispiel der Erfindung ist in der Zeichnung dargestellt und in der nachfolgenden Beschreibung näher erläutert. Es zeigen:
- Figur 1: eine mit einer Lichtschranken-Schutzeinrichtung versehene Halterung in der Seitenansicht,
- Figur 2: das die Lichtschranken-Schutzeinrichtung tragende Führungselement in einer Ansicht von oben, wobei ein mit einer Federzunge einer Führungswandung versehener Nutenstein in einer Führungsnut des Führungselements geführt ist, und
- Figur 3: eine Vorderansicht der zwischen dem Führungselement und der Lichtschranken-Schutzeinrichtung angeordneten Justiereinrichtung.

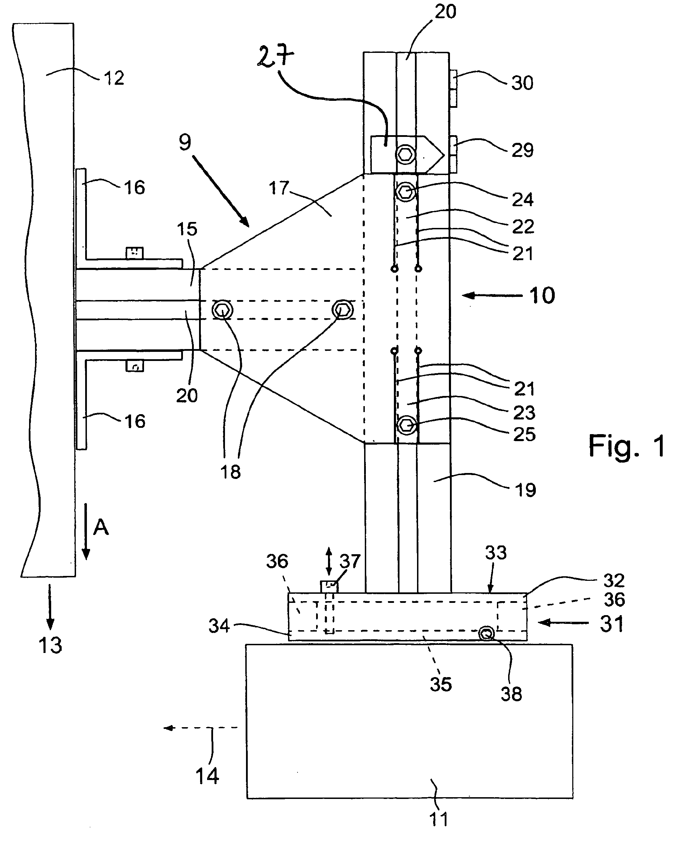

Die in Figur 1 dargestellte Halterung 10 für eine Lichtschranken-Schutzeinrichtung 11 ist seitlich an einem Oberwerkzeug 12 einer Maschine, wie einer Abkantpresse, einer Schneidemaschine, einer Stanzmaschine oder dergleichen, befestigt. Bei einem Arbeitsvorgang des Oberwerkzugs 12 bewegt sich dieses in der Arbeitsrichtung A, wobei die mit der Halterung 10 verbundene Lichtschranken-Schutzeinrichtung 11 entsprechend mitbewegt wird. Parallel zum Arbeitsbereich 13 des Oberwerkzeugs 12 verläuft unterhalb desselben beabstandet der Lichtstrahl 14 der Lichtschranken-Schutzeinrichtung 11. Wie aus dem eingangs angegebenen Stand der Technik hervorgeht, kann es sich dabei im einfachsten Falle um einen einzelnen Lichtstrahl oder aber um mehrere Lichtstrahlen in einer bestimmten Anordnung oder um einen Lichtvorhang handeln. Bei einer Ausbildung als Reflexionslichtschranke wird der Lichtstrahl, der von der Lichtschranken-Schutzeinrichtung 11 emitiert wird, am entgegengesetzten Endbereich des Oberwerkzeugs 12 reflektiert und gelangt so zu einem Lichtempfänger, der ebenfalls in der Lichtschranken-Schutzeinrichtung 11 angeordnet ist. Zur Reflexion kann ein sich entlang der Bewegungsbahn des Oberwerkzeugs 12 angeordneter Spiegel vorgesehen sein, oder ein Spiegel wird mittels einer Halterung am Oberwerkzeug 12 fixiert und mitgeführt. Dabei kann es sich um eine der Halterung 10 vergleichbare Halterung oder um eine einfachere Ausführung handeln.

Im Falle einer Einweg-Lichtschranke ist die an der Halterung 10 angeordnete Lichtschranken-Schutzeinrichtung 11 als Lichtemitter ausgebildet, und an der entgegengesetzten Seite des Oberwerkzeugs 12 ist eine entsprechende Halterung 10 mit einem Lichtempfänger angeordnet. Es handelt sich dabei üblicherweise um einen Laser und einer Laser-Empfänger. In diesem Falle besteht die Halterung aus zwei sich entsprechenden Teilhalterungen, und die Lichtschranken-Schutzeinrichtung besteht aus einem Lichtsender und einem Lichtempfänger.

Anstelle der Montage der Halterung 10 bzw. der Teilhalterungen 10 direkt am Oberwerkzeug 12 kann diese Halterung 10 auch an einem Werkzeugträger für das Oberwerkzeug 12 montiert sein.

Anstelle eines gegen ein Unterwerkzeug bewegbaren Oberwerkzeugs 12, wie dargestellt, kann prinzipiell auch eine umgekehrte Anordnung vorgesehen sein, das heißt, ein bewegbares Unterwerkzeug wird gegen ein Oberwerkzeug bewegt. In diesem Falle ist die Halterung mit der Lichtschranken-Schutzeinrichtung 11 spiegelverkehrt nach oben gerichtet am Unterwerkzeug montiert.

Die Wirkungsweise der Lichtschranken-Schutzeinrichtung 11 besteht darin, dass bei Unterbrechung des oder der Lichtstrahlen 14 durch ein Hindernis während der Arbeitsbewegung des Oberwerkzeugs 12 dieses abrupt abgebremst und gestoppt wird, um Verletzungen eines zur Unterbrechung eines oder mehrerer Lichtstrahlen verursachenden menschlichen Körperteils oder die Beschädigung von diese Unterbrechung bewirkenden Gegenständen zu verhindern. Auch Beschädigungen des Oberwerkzeugs 12 selbst werden dadurch verhindert.

Die Halterung 10 besteht im Wesentlichen aus einer Profilstange 15 mit quadratischem Querschnitt, die mittels Haltewinkeln 16 seitlich am Oberwerkzeug 12 und senkrecht zu dessen Seitenflächen montiert ist. An zwei entgegengesetzten Seiten der Profilstange 15 sind Führungswandungen 17 mittels Halteschrauben 18 montiert. Die über das freie Ende der Profilstange 15 überstehenden rechteckigen Bereiche der Führungswandungen 17 bilden seitliche Führungen für ein senkrecht zur Profilstange 15 verschiebbar angeordnetes Führungselement 19. Dieses besteht beim Ausführungsbeispiel aus demselben Profilstangenmaterial wie die Profilstange 15. Die Profilstange 15 bildet zusammen mit den Führungswandungen 17 eine Führungseinrichtung 9 für das Führungselement 19.

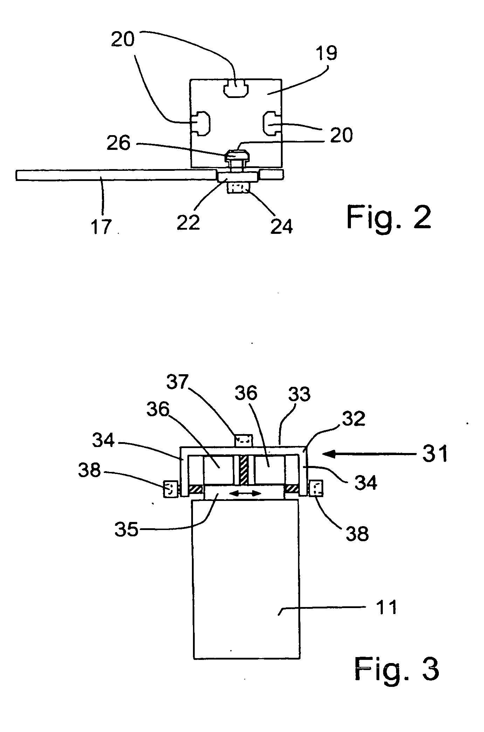

Figur 2 zeigt das Führungselement 19 von oben, wobei zur Vereinfachung der Zeichnung nur eine Führungswandung 17 an einer Seite dargestellt ist und auch auf die Darstellung der damit verbundenen Profilstange 15 zur Vereinfachung der Darstellung verzichtet wurde. Das Führungselement 19 (und entsprechend auch die Profilstange 15) weist an allen vier Seiten Längsnuten 20 auf, die als T-Nuten ausgebildet sind. Der überstehende rechteckige Bereich der Führungswandungen 17 besitzt von oben und von unten her je zwei parallele Längsschlitze 21, durch die eine obere Federzunge 22 und eine untere Federzunge 23 gebildet werden. An den freien Endbereichen dieser Federzungen 22, 23 sind Einstellschrauben 24, 25 einschraubbar angeordnet, die an ihrem dem Führungselement 19 zugewandten Endbereich mit Nutensteinen 26 versehen sind. Diese Nutensteine 26 sind in der Längsnut 20 der gegenüberliegenden Seite des Führungselements 19 verschiebbar angeordnet. An der entgegengesetzten Seite des Führungselements 19 greifen entsprechend Einstellschrauben und Nutensteine von der rückseitigen Führungswandung 17 ein, die entsprechende Federzungen besitzen. Wird eine Einstellschraube 24 bzw. 25, gemäß Figur 2 die Einstellschraube 24 eingeschraubt, so wird die obere Federzunge 22, wie aus Figur 2 erkennbar ist, nach außen gebogen, und der Nutenstein 26 stützt sich federnd an der Innenseite der Längsnut 20 ab. Auf diese Weise wird zum einen das Führungselement 19 mittels der vier Nutensteine 26 zwischen den beiden Führungswandungen 17 vertikal verschiebbar geführt, und zum anderen kann durch die Einstellschrauben 24, 25 die gewünschte Reibung eingestellt werden, die bei nicht herausgebogenen Federzungen äußerst gering ist, sodass ein weiter Einstellbereich möglich ist.

In Abwandlung des dargestellten Ausführungsbeispiels kann die Zahl der Federzungen 22, 23 und Einstellschrauben 24, 25 auch variieren. So können beispielsweise nur auf einer Seite, also nur an einer der beiden Führungswandungen 17, solche Federzungen und Einstellschrauben vorgesehen sein. Weiterhin können einzelne oder alle der in den Längsnuten 20 geführten Nutensteine 26 anstelle von Einstellschrauben auch mit Abstandselementen, insbesondere Abstandshülsen ausgestattet sein, die je nach Länge die Federzungen mehr oder weniger vorspannen und so die Reibungskraft einstellen. Die Nutensteine 26 können auch nicht an Federzungen montiert sein, sondern diese Nutensteine können dann direkt an einer oder an beiden Führungswandungen 17 angeordnet sein. Zur Einstellung der Reibungskraft genügt ein einziger, mit einer Einstellschraube bzw. einem Abstandselement versehener Nutenstein 26.

Die Einstellung der Vertikalposition der Lichtschranken-Schutzeinrichtung 11 relativ zum Oberwerkzeug 12 erfolgt mittels eines Anschlagelements 27. Dieses besitzt eine mit einem Nutenstein versehene Feststellschraube 28, wobei der in den Figuren nicht erkennbare Nutenstein bei gelöster Feststellschraube 28 in der Längsnut 20 verschiebbar ist. Da das Anschlagelement 27 mittels der Feststellschraube 28 an einer beliebigen Position fixierbar ist, kann der Abstand zwischen dem Lichtstrahl 14 der Lichtschranken-Schutzeinrichtung 11 und dem Arbeitsbereich 13 des Oberwerkzeugs 12 stufenlos eingestellt werden. Das Anschlagelement 27 stützt sich im fixierten Zustand an der Oberseite eines der Führungswandungen 17 (oder beider Führungswandungen) ab und verhindert dadurch eine schwerkraftbedingte Bewegung des Führungselements 19 und der daran befestigten Lichtschranken-Schutzeinrichtung 11 nach unten. Andererseits lässt sich dadurch das Führungselement 19 bis auf die eingestellte Reibungskraft ungehindert nach oben schieben, was beispielsweise dann erfolgt, wenn bei einer Arbeitsbewegung des Oberwerkzeugs 12 nach unten die Lichtschranken-Schutzeinrichtung 11 auf ein Hindernis stößt. Hierdurch wird eine Beschädigung verhindert.

Sind bei einer Maschine unterschiedliche Oberwerkzeuge 12 auswechselbar vorgesehen oder sind unterschiedliche Arbeitsbereiche 13 an einem Oberwerkzeug 12 austauschbar angeordnet, so muss die Lichtschranken-Schutzeinrichtung 11 jeweils wieder so justiert werden, dass der Abstand zwischen dem Lichtstrahl 14 und der Unterkante des Arbeitsbereichs 13 gleich bleibt. Um diesen Vorgang zu erleichtern, sind an einer der mit dem Anschlagelement 27 versehenen Seite des Führungselements 19 Positionsmarkierungen 29, 30 vorgesehen, die entsprechend dem Anschlagelement 27 mittels nicht dargestellter Feststellschrauben und Nutensteine in beliebigen Positionen fixierbar sind. Das Anschlagelement 27, wie auch die Positionsmarkierungen 29, 30, besitzen einen spitz zulaufenden, pfeilartigen Endbereich, wobei diese pfeilartigen Endbereiche der Feststellschraube 28 einerseits und der Positionsmarkierungen 29, 30 andererseits gegeneinander gerichtet sind. Hierdurch braucht das Anschlagelement 27 lediglich von einer Positionsmarkierung 29 zur anderen Positionsmarkierung 30 verschoben und wieder fixiert werden, um bei einer Auswechslung des Oberwerkzeugs 12 oder am Oberwerkzeug 12 eine Positionsanpassung der Lichtschranken-Schutzeinrichtung 11 durchzuführen. Die Zahl der Positionsmarkierungen 29, 30 ist selbstverständlich beliebig und hängt von der Zahl der verwendeten Oberwerkzeuge 12 bzw. Arbeitsbereiche 13 ab.

Am unteren Ende des Führungselements 19 ist eine Justiereinrichtung 31 zur Feinjustierung der Lichtschranken-Schutzeinrichtung 11 fixiert. Diese Justiereinrichtung 31 besteht im Wesentlichen aus einer U-Profilschiene 32, die mit ihrer äußeren Flachseite 33 ungefähr mittig am unteren Ende des Führungselements 19 fixiert ist, während die beiden leistenartigen Schenkel 34 nach unten weisen. Die innere Flachseite der U-Profilschiene 32 stützt sich an einem plattenartigen Halteblock 35, der an der Lichtschranken-Schutzeinrichtung 11 fixiert ist, über vier elastische Blöcke 36 ab. Eine in der Längsrichtung der U-Profilschiene 32 asymmetrisch angeordnete Justierschraube 37 verbindet in vertikaler Richtung die U-Profilschiene 32 mit dem Halteblock 35. Wird die Justierschraube 37 eingeschraubt, so werden die beiden elastischen Blöcke 36 an einem Endbereich der U-Profilschiene 32, an dem sich die Zentrierschraube 37 befindet, stärker zusammengepresst als die beiden elastischen Blöcke 36 am entgegengesetzten Endbereich, sodass eine Verschwenkung um eine horizontale Achse die Folge ist.

Wie aus Figur 3 erkennbar ist, sind zwei weitere Justierschrauben 38 in die leistenartigen Schenkel 34 der U-Profilschiene 32 gegeneinander gerichtet eingeschraubt und fixieren den Halteblock 35 zwischen sich. Diese beiden Justierschrauben 38 sind gemäß Figur 1 in der Längsrichtung der U-Profilschiene 32 am gegenüber der ersten Justierschraube 37 entgegengesetzten Endbereich angeordnet. Beim gegensinnigen Justieren der beiden Justierschrauben 38 erfolgt somit eine Schwenkbewegung der Lichtschranken-Schutzeinrichtung 11 um eine mit der ersten Justierschraube 37 übereinstimmende Schwenkachse. Auf diese Weise lässt sich durch diese beiden Schwenkbewegungen die Lichtschranken-Schutzeinrichtung 11 beliebig justieren.

In Abwandlung des dargestellten Ausführungsbeispiels kann anstelle der mit den beiden Führungswandungen 17 versehenen Profilstange 15 auch eine andere Führungsanordnung treten, die eine Vertikalführung für das Führungselement 19 darstellt. Das Führungselement 19 selbst kann ebenfalls eine abweichende Querschnittsgestalt aufweisen, beispielsweise auch eine runde oder ovale Querschnittsgestalt, wobei die Art der Reibungsbremse ebenfalls variieren kann, das heißt, es können andere bekannte Reibungsbremsen die beschriebene Reibungsbremse ersetzen.

Die Profilstange 15 und/oder das Führungselement 19 kann auch als Rohr ausgebildet sein. In der Ausbildung als Rohr oder mit rundem bzw. ovalem Querschnitt kann anstelle des beschriebenen Anschlagelements 27 auch ein verschiebbarer und fixierbarer Anschlagring treten.

Die Positionsmarkierungen 29, 30 können im einfachsten Falle auch durch Aufkleben, Aufmalen oder dergleichen realisiert werden.

Anstelle der beschriebenen Führung des Führungselements 19 durch Nutensteine können auch bekannte Prismen- und Kugelführungen oder eine Schwalbenschwanzführung treten. Federklemmelemente können dabei die erforderliche Selbsthemmung bewirken und als Reibungsbremse dienen. Die erzielte Hemmung sollte in jedem Falle 300 N nicht überschreiten, um zu verhindern, dass ein menschliches Körperteil eingeklemmt werden kann.

Anstelle separater elastischer Blöcke 36 kann in der Justiereinrichtung 31 auch ein einziger durchgehender Block einteilig oder mehrteilig vorgesehen sein. Im Übrigen kann die Justiereinrichtung 31 auch durch andere bekannte Justiereinrichtungen ersetzt werden, wobei die im Ausführungsbeispiel dargestellte Justiereinrichtung 31 besondere Vorteile bietet.

## Patentansprüche

1. Mit einer Lichtschranken-Schutzeinrichtung versehene, an einem linear in eine Arbeitsrichtung (A) und zurück bewegbaren Werkzeug (12) oder dessen Werkzeugträger einer Maschine befestigbare Halterung (10), die eine am Werkzeug (12) oder Werkzeugträger fixierbare Führungseinrichtung (9) und ein in der Arbeitsrichtung (A) des Werkzeugs (12) verschiebbar in oder an dieser geführtes und die Lichtschranken-Schutzeinrichtung (11) tragendes Führungselement (19) besitzt, **dadurch gekennzeichnet, dass** eine die Verschiebung des Führungselements (19) erschwerende Reibungsbremse und ein kontinuierlich in der Verschieberichtung verstellbares und fixierbares Anschlagelement (27) vorgesehen ist, das in der Anschlagposition eine Relativbewegung zwischen Führungseinrichtung (9) und Führungselement (19) in die Arbeitsrichtung des Werkzeugs verhindert, in die Gegenrichtung jedoch zulässt.

2. Halterung nach Anspruch 1, **dadurch gekennzeichnet, dass** das Führungselement (19) als Profilstange ausgebildet ist.

3. Halterung nach Anspruch 2, **dadurch gekennzeichnet, dass** die Führungseinrichtung (9) eine mit seinem freien Endbereich senkrecht am Führungselement (19) mündende und am Werkzeug (12) oder dessen Werkzeugträger fixierbare Profilstange (15) besitzt, die im Wesentlichen der der Führungseinrichtung (9) entspricht, und dass an zwei entgegengesetzten Seiten der Profilstange (15) der Führungseinrichtung (9) Führungswandungen (17) fixiert sind, zwischen denen das Führungselement (19) geführt ist.

4. Halterung nach einem der Ansprüche 1 bis 3, **dadurch gekennzeichnet, dass** die Führungseinrichtung (9) in Längsnuten (20) des langgestreckten Führungselements (19) mit einstellbarer Reibungskraft geführte Nutensteine (26) aufweist.

5. Halterung nach Anspruch 4, **dadurch gekennzeichnet, dass** das Anschlagelement (27) mit einem in einer dieser Längsnuten (20) geführten und fixierbaren Nutenstein versehen ist.

6. Halterung nach Anspruch 4 oder 5, **dadurch gekennzeichnet, dass** jeder Nutenstein (26) zur Einstellung der Reibungskraft mit einer Einstellschraube (24) versehen ist, die vorzugsweise jeweils am freien Endbereich einer Federzunge (22, 23) der Führungseinrichtung (9) angeordnet ist, oder über ein Abstandselement am freien Endbereich der Federzunge (22, 23) angeordnet ist.

7. Halterung nach Anspruch 6, **dadurch gekennzeichnet, dass** sich die Federzungen (22, 23) in der Verschieberichtung des Führungselements (19) erstrecken und/oder dass die Federzungen (22, 23) Wandbereiche von zwei Führungswandungen (17) der Führungseinrichtung (9) sind, zwischen denen das Führungselement (19) verschiebbar ist.

8. Halterung nach einem der Ansprüche 4 bis 7, **dadurch gekennzeichnet, dass** das Führungselement (19) an gegenüberliegenden Seiten Längsnuten (20) besitzt und dass wenigstens je ein Nutenstein (26), vorzugsweise je zwei Nutensteine (26), an diesen beiden Seiten in den Längsnuten (20) geführt sind.

9. Halterung nach einem der vorhergehenden Ansprüche, **dadurch gekennzeichnet, dass** wenigstens eine Positionsmarkierung (29, 30) in der Längsrichtung verstellbar und fixierbar am Führungselement (19) angeordnet ist, die vorzugsweise an einer an der das Anschlagelement (27) tragenden Seitenwandung anschließenden Seitenwandung des Führungselements (19) angeordnet ist.

10. Halterung nach Anspruch 9, **dadurch gekennzeichnet, dass** die wenigstens eine Positionsmarkierung (29, 30) mittels eines Nutensteins in einer Längsnut des Führungselements (19) verschiebbar und fixierbar ist.

11. Halterung nach Anspruch 9 oder 10, **dadurch gekennzeichnet, dass** die wenigstens eine Positionsmarkierung (29, 30) einerseits und das Anschlagelement (27) andererseits als gegeneinander gerichtete Zeiger ausgebildet sind.

12. Halterung nach einem der vorhergehenden Ansprüche, **dadurch gekennzeichnet, dass** zwischen dem Führungselement (19) und der Lichtschranken-Schutzeinrichtung (11) eine diese in ihrer Position justierende Justiereinrichtung (31) angeordnet ist, die vorzugsweise Mittel zum horizontalen und vertikalen Schwenken besitzt.

13. Halterung nach Anspruch 12, **dadurch gekennzeichnet, dass** die Justiereinrichtung (31) eine mit dem Führungselement (19) rechtwinklig verbundene U-Schiene (32) aufweist, die über eine zwischen den Schenkeln (34) der U-Schiene (32) angeordnete elastische Anordnung (36) mit der Lichtschranken-Schutzeinrichtung (11) oder einem daran fixierten Justierteil (35) verbunden ist, wobei eine Justierschraubenanordnung (37, 38) zum Verschwenken der Lichtschranken-Schutzeinrichtung (11) um eine horizontale und eine vertikale Achse vorgesehen ist.

14. Halterung nach Anspruch 12 oder 13, **dadurch gekennzeichnet, dass** eine erste Justierschraube (37) in der Längsrichtung der U-Schiene (32) asymmetrisch versetzt den Boden der U-Schiene (32) über die elastische Anordnung (36) mit der Lichtschranken-Schutzeinrichtung (11) oder dem Justierteil (35) verbindet, und dass zwei an gegenüberliegenden Stellen der U-Schenkel (34) der U-Schiene (32) gegeneinander gegen die dazwischen liegende Lichtschranken-Schutzeinrichtung (11) oder das dazwischenliegende Justierteil (35) schraubbare Justierschrauben (38) vorgesehen sind, die in der Längsrichtung zur ersten Justierschraube (37) versetzt angeordnet sind, insbesondere an einem entgegengesetzten Endbereich der U-Schenkel (34).

## Claims

1. Fixture (10), provided with a photoelectric beam safety device, which may be fastened to a machine tool (12) or its tool carrier capable of linear movement in an operating direction (A) and back again, and having a guide device (9) able to be fixed to the tool (12) or tool carrier, and a guide element (19) guided in or on the tool (12) with the ability to slide in the operating direction (A) of the tool and carrying a photoelectric beam safety device (11), **characterised in that** there is provided a friction brake impeding the sliding of the guide element (19) and a stop element (27) which is continuously adjustable and able to be fixed in the direction of sliding and in the stop position prevents relative movement between the guide device (9) and the guide element (19) in the operating direction of the tool, but allows it in the opposite direction.

2. Fixture according to claim 1, **characterised in that** the guide element (19) is in the form of a profile rod.

3. Fixture according to claim 2, **characterised in that** the guide device (9) has a profile rod (15) with its free end section leading vertically into the guide element (19) and able to be fixed to the tool (12) or its tool carrier, and which corresponds substantially to that of the guide device (9), and that guide walls (17) between which the guide element (19) is guided are fixed on two opposite sides of the profile rod (15) of the guide device (9).

4. Fixture according to any of claims 1 to 3, **characterised in that** the guide device (9) has sliding blocks (26) guided with adjustable friction force in longitudinal slots (20) of the elongated guide element (19).

5. Fixture according to claim 4, **characterised in that** the stop element (27) is provided with a sliding block guided and able to be fixed in one of these longitudinal slots (20).

6. Fixture according to claim 4 or 5, **characterised in that** each sliding block (26) is provided with a setting screw (24) for setting the friction force, preferably located in each case on the free end section of a spring tongue (22, 23) of the guide device (9), or on the free end section of the spring tongue (22, 23) via a spacer element.

7. Fixture according to claim 6, **characterised in that** the spring tongues (22, 23) extend in the direction of sliding of the guide element (19) and/or that the spring tongues (22, 23) are wall areas of two guide walls (17) of the guide device (9), between which the guide element (19) is able to slide.

8. Fixture according to any of claims 4 to 7, **characterised in that** the guide element (19) has longitudinal slots (20) on opposite sides, and that in each case at least one sliding block (26), preferably two sliding blocks (26), are guided in the longitudinal slots (20) on these two sides.

9. Fixture according to any of the preceding claims, **characterised in that** at least one position marking (29, 30) is fitted to the guide element (19), adjustable and able to be fixed in the longitudinal direction, and preferably located on a side wall of the guide element (19) adjoining the side wall carrying the stop element (27).

10. Fixture according to claim 9, **characterised in that** the position marking or markings (29, 30) is or are able to slide and to be fixed in a longitudinal slot of the guide element (19) by means of a sliding block.

11. Fixture according to claim 9 or 10, **characterised in that** the position marking or markings (29, 30) one the one hand and the stop element (27) on the other hand is or are formed by pointers aligned opposite one another.

12. Fixture according to any of the preceding claims, **characterised in that** between the guide element (19) and the photoelectric beam safety device (11) is an adjusting device (31) for adjusting the position of the latter, and preferably with means for horizontal and vertical swivelling.

13. Fixture according to claim 12, **characterised in that** the adjusting device (31) has a U-rail (32) connected to the guide element (19) at right-angles, and connected to the photoelectric beam safety device (11) or to an adjusting part (35) fixed to the latter via an elastic assembly (36) mounted between the limbs (34) of the U-rail (32), with an adjusting screw assembly (37, 38) provided for swivelling the photoelectric beam safety device (11) around a horizontal and a vertical axis.

14. Fixture according to claim 12 or 13, **characterised in that** a first adjusting screw assembly (37), asymmetrically offset in the axial direction of the U-rail (32), connects the base of the U-rail (32) via the elastic assembly (36) with the photoelectric beam safety device (11) or the adjusting part (35), and that there are provided two adjusting screws (38) capable of being screwed together at opposite points of the U-limbs (34) of the U-rail (32) against the photoelectric beam safety device (11) lying between or the adjusting part (35) lying between, and which are offset in the axial direction relative to the first adjusting screw assembly (37), in particular at an opposite end section of the U-limbs (34).

## Revendications

1. Support (10), muni d'un dispositif de protection à barrière lumineuse et pouvant être fixé contre un outil (12), mobile linéairement dans une direction de travail (A) et dans la direction inverse, ou contre le porte-outil d'une machine, lequel support comporte un dispositif de guidage (9), destiné à être fixé sur l'outil (12) ou le porte-outil, et un élément de guidage (19), guidé en translation dans la direction de travail (A) de l'outil (12) dans ou sur ledit dispositif de guidage et portant le dispositif de protection à barrière lumineuse (11), **caractérisé en ce qu'**il est prévu un frein de friction, rendant difficile le coulissement de l'élément de guidage (19), et un élément de butée (27), qui peut être déplacé en continu dans le sens de coulissement et être immobilisé et qui, dans la position de butée, empêche un mouvement relatif entre le dispositif de guidage (9) et l'élément de guidage (19) dans la direction de travail (A) de l'outil, néanmoins autorise ce mouvement dans la direction inverse.

2. Support selon la revendication 1, **caractérisé en ce que** l'élément de guidage (19) est réalisé sous forme de barre profilée.

3. Support selon la revendication 2, **caractérisé en ce que** le dispositif de guidage (9) comporte une barre profilée (15), qui débouche avec son extrémité libre perpendiculairement sur l'élément de guidage (19) et peut être fixée sur l'outil (12) ou sur le porte-outil et qui correspond sensiblement à la barre profilée de l'élément de guidage (19), et **en ce que** sur deux côtés opposés de la barre profilée (15) du dispositif de guidage (9) sont fixées des parois de guidage (17) entre lesquelles est guidé l'élément de guidage (19).

4. Support selon l'une quelconque des revendications 1 à 3, **caractérisé en ce que** le dispositif de guidage (9) comporte des coulisseaux (26), guidés avec une force de frottement réglable dans des rainures longitudinales (20) de l'élément de guidage (19) allongé.

5. Support selon la revendication 4, **caractérisé en ce que** l'élément de butée (27) est muni d'un coulisseau guidé dans une de ces rainures longitudinales (20) et pouvant être immobilisé.

6. Support selon la revendication 4 ou 5, **caractérisé en ce que** chaque coulisseau (26), pour le réglage de la force de frottement, est muni d'une vis de réglage (24) qui est disposée de préférence dans chaque cas sur l'extrémité libre d'une languette flexible (22, 23) du dispositif de guidage (9), ou est disposée par l'intermédiaire d'un écarteur sur l'extrémité libre de la languette flexible (22, 23).

7. Support selon la revendication 6, **caractérisé en ce que** les languettes flexibles (22, 23) s'étendent dans le sens de coulissement de l'élément de guidage (19) et/ou en ce que les languettes flexibles (22, 23) sont des parties de deux parois de guidage (17) du dispositif de guidage (9), entre lesquelles l'élément de guidage (19) peut coulisser.

8. Support selon l'une quelconque des revendications 4 à 7, **caractérisé en ce que** l'élément de guidage (19) comporte, sur deux côtés opposés, des rainures longitudinales (20) et **en ce que** respectivement un coulisseau (26), de préférence respectivement deux coulisseaux (26) sont guidés sur ces deux côtés dans des rainures longitudinales (20).

9. Support selon l'une quelconque des revendications précédentes, **caractérisé en ce qu'**au moins un repère de position (29, 30) est disposé sur l'élément de guidage (19) en pouvant être déplacé dans le sens longitudinal et être immobilisé, lequel repère est disposé de préférence sur une paroi latérale de l'élément de guidage (19), dans le prolongement de la paroi latérale portant l'élément de butée (27).

10. Support selon la revendication 9, **caractérisé en ce que** ledit au moins un repère de position (29, 30) peut être déplacé et immobilisé au moyen d'un coulisseau dans une rainure longitudinale de l'élément de guidage (19).

11. Support selon la revendication 9 ou 10, **caractérisé en ce que** ledit au moins un repère de position (29, 30), d'une part, et l'élément de butée (27), d'autre part, sont réalisés sous forme d'aiguilles pointées l'une vers l'autre.

12. Support selon l'une quelconque des revendications précédentes, **caractérisé en ce que**, entre l'élément de guidage (19) et le dispositif de protection à barrière lumineuse (11), est agencé un dispositif d'ajustement (31), qui est destiné à ajuster la position de ceux-ci et qui comporte de préférence des moyens pour le pivotement horizontal et vertical.

13. Support selon la revendication 12, **caractérisé en ce que** le dispositif d'ajustement (31) comporte un rail en U (32), qui est assemblé en angle droit à l'élément de guidage (19) et qui, par l'intermédiaire d'un dispositif flexible (36), agencé entre les ailes (34) du rail en U (32), est relié au dispositif de protection à barrière lumineuse (11) ou à un élément d'ajustement (35) fixé contre ce dernier, un système à vis de réglage (37, 38) étant prévu pour faire pivoter le dispositif de protection à barrière lumineuse (11) autour d'un axe horizontal et d'un axe vertical.

14. Support selon la revendication 12 ou 13, **caractérisé en ce qu'**une première vis de réglage (37), décalée asymétriquement dans le sens longitudinal du rail en U (32), relie le fond du rail en U (32) avec le dispositif de protection à barrière lumineuse (11) ou l'élément d'ajustement (35) par l'intermédiaire du dispositif flexible (36), et **en ce qu'**il est prévu deux vis de réglage (38), qui peuvent être vissées, l'une en face de l'autre à des emplacements opposés sur les ailes du U (34) du rail en U (32), contre le dispositif de protection à barrière lumineuse (11), posé entre celles-ci, ou l'élément d'ajustement (35), posé entre celles-ci, et qui sont décalées dans le sens longitudinal par rapport à la première vis de réglage (37), en particulier sur une extrémité opposée des ailes du U (34).
